## Europäisches Patentamt
## European Patent Office
## Office européen des brevets

(11) Veröffentlichungsnummer: **0 056 090**
**B1**

# EUROPÄISCHE PATENTSCHRIFT

(45) Veröffentlichungstag der Patentschrift:
04.04.84

(21) Anmeldenummer: 81108839.2

(22) Anmeldetag: 24.10.81

(51) Int. Cl.³: **C 02 F 11/14,** C 10 G 33/00 //
**B01D37/00**

(54) **Verfahren zum Entwässern mineralölhaltiger Schlämme mit Rückgewinnung des Ölanteils.**

(30) Priorität: **14.01.81 DE 3100899**

(43) Veröffentlichungstag der Anmeldung:
**21.07.82 Patentblatt 82/29**

(45) Bekanntmachung des Hinweises auf die Patenterteilung:
**04.04.84 Patentblatt 84/14**

(84) Benannte Vertragsstaaten:
**AT BE CH DE FR GB IT LI NL SE**

(56) Entgegenhaltungen:
**AT - B - 349 399**
**CH - A - 487 082**
**DE - A - 2 732 018**
**DE - A - 2 920 350**
**DE - B - 1 517 705**

(73) Patentinhaber: **BASF Aktiengesellschaft,**
**Carl-Bosch-Strasse 38, D-6700 Ludwigshafen (DE)**

(72) Erfinder: **Sander, Bruno, Dr., Moerikestrasse 10,**
**D-6700 Ludwigshafen (DE)**
Erfinder: **Hovemann, Friedrich, Dr., Magdeburger**
**Strasse 7, D-6832 Hockenheim (DE)**
Erfinder: **Scherling, Kurt, Haydnstrasse 8,**
**D-6944 Hemsbach (DE)**

# Verfahren zum Entwässern mineralölhaltiger Schlämme mit Rückgewinnung des Ölanteils

Die vorliegende Erfindung betrifft ein Verfahren zum Entwässern mineralölhaltiger Schlämme durch zweistufige Entwässerung unter Verwendung feinteiliger Zuschlagstoffe und organischer Flockungsmittel.

Unter mineralölhaltigen Schlämmen, im folgenden Ölschlämme genannt, sollen dreiphasige Gemische aus Wasser, Mineralöl und Schlammfeststoffen verstanden werden. Solche Ölschlämme fallen bei der Erdölgewinnung, beim Transport von Rohöl als »Tankerschlamm«, bei der Lagerung von Rohöl als Tankrückstände, bei der Rohölaufbereitung, in der petrochemischen Industrie, in der Mineralöl-Industrie und bei Verbrauchern von Mineralölprodukten, z. B. in Form von mit Feststoffen verunreinigten Alt- oder Abfallölen an.

Die Beseitigung der Ölschlämme erfolgt je nach ihrer Konsistenz durch Ablagerung in Schlammteichen oder auf Sondermülldeponien. Im letzteren Fall muß eine zusätzliche Verfestigung der Ölschlämme mit alkalischen Mitteln, meistens durch Hinzufügen von gebranntem Kalk vorgenommen werden. Die Beseitungsarten stellen im Grunde nur eine Zwischenlagerung dar, da eine erhebliche Gefährdung der Umwelt gegeben ist. Durch Sickerungsvorgänge kann Mineralöl in das Grund- und Oberflächenwasser gelangen und somit die Brauch- und Trinkwassergewinnung gefährden. Es treten außerdem Geruchsbelästigungen auf.

Eine andere Art der Entsorgung ist die Verbrennung in Abfall-Verbrennungsanlagen. Durch den meist hohen Wasseranteil geht wertvolle Primärenergie verloren. Bei geringeren Ölanteilen müssen Zusatzbrennstoffe eingesetzt werden.

Verfahren, die eine Rückgewinnung des Ölanteils zulassen würden, sind mehrstufige, komplizierte Verfahren wie z. B. Destillation und Extraktion. Diese Trennverfahren sind kostenintensiv und energieaufwendig und daher bis heute unwirtschaftlich.

Eine selektive Abtrennung der Schlammfeststoffe aus dem Dreiphasengemisch durch Flockung mit organischen Flockungsmitteln und Sedimentation gelingt insbesondere bei höheren Ölanteilen nicht, da die Flocken verschleimen.

Aufgabe der Erfindung war es demnach, die Ölschlämme durch geeignete Maßnahmen so zu verändern bzw. zu behandeln, daß das Schlammwasser mit Hilfe üblicher Entwässerungsverfahren weitgehend entfernt und der Ölteil als reiner Stoff abgetrennt und zurückgewonnen werden kann. Eine weitere Aufgabe der Erfindung bestand darin, die Schlammfeststoffe so hoch aufzukonzentrieren, daß sie möglichst ölarm und stichfest werden. Das Feststoffkonzentrat soll entweder deponiefähig oder verbrennbar sein.

Diese Aufgaben wurden erfindungsgemäß dadurch gelöst, daß man

a) in den mineralölhaltigen Schlämmen als feinteilige Zuschlagstoffe Asche, Kohle, Sand oder deren Gemische in rieselfähiger Form oder als wäßrige Suspension homogen verteilt, und zwar in einer Menge, bis der Gesamtfeststoffgehalt dieser Mischung 10 bis 30 Gew.-%, insbesondere 12 bis 20 Gew.-%, beträgt,

b) dieses Schlammgemisch mit wäßrigen Lösungen organischer Flockungsmittel, bevorzugt anionischer Flockungsmittel, behandelt,

c) durch Schwerkraftfiltration die Hauptmenge des Schlammwassers abtrennt,

d) das vorentwässerte Schlammgemisch mit wäßrigen Lösungen von Salzen des Aluminiums oder des dreiwertigen Eisens behandelt und

e) durch Druckfiltration weiterhin entwässert, wobei gleichzeitig die Hauptmenge des vorhandenen Mineralöls abgetrennt wird.

Nach einer weiteren Ausbildung der Erfindung wird ein Teil der bei der Druckfiltration erhaltenen Filterkuchen mechanisch aufgelockert, in eine feinteilige Form gebracht und dann als feinteilige Zuschlagstoffe anstelle von Asche, Kohle oder Sand in den mineralölhaltigen Schlämmen homogen verteilt.

Die erfindungsgemäß zu behandelnden Ölschlämme haben im allgemeinen einen Mineralölgehalt von 10 bis 75 Gew.-%. Der Gehalt an Schlammfeststoffen schwankt im Bereich von 2 bis 10 Gew.-%.

Zur Erhöhung des Feststoffgehaltes bis zu einer Konzentration von 10 bis 30 Gew.-% werden erfindungsgemäß feinteilige Zuschlagstoffe zugegeben.

Als solche sind Aschen der verschiedensten Herkunft geeignet. Besonders wirtschaftlich ist die Verwendung von Aschen, die bei der Müllverbrennung oder bei der Verbrennung von Klärschlämmen anfallen. Hierbei ist zu beachten, daß die Aschen einen pH-Wert von 6 bis höchstens 8 besitzen. Eine Asche, deren pH-Wert größer als 8 beträgt, beeinflußt die nachfolgende Flockungsreaktion im allgemeinen nachteilig. Die Asche sollte möglichst frei von in Wasser löslichen Bestandteilen sein.

Ferner kommen als feinteilige Zuschlagstoffe feinteilige Kohlen, die z. B. bei der Trennung von Feinkohle und Gangart (Berge) durch Flotation und nachfolgender Entwässerung gewonnen werden, in Betracht. Auch Kohleschlämme, die bei Naßaufbereitungsverfahren entstehen, sind geeignet. Ebenso können Siebfraktionen von Kraftwerkskohlen oder von Grünkoks aus Raffinerien bis zu einer

## 0 056 090

Korngröße von 1 mm verwendet werden. In Sonderfällen kann auch feiner Sand als feinteiliger Zuschlagstoff verwendet werden.

Die Vermischung der Ölschlämme mit den feinteiligen Zuschlagstoffen erfolgt entweder kontinuierlich in handelsüblichen dynamischen oder statischen Rohrmischern oder absatzweise in Rührbehältern. Dem Schlammgemisch werden danach wäßrige Lösungen organischer Flockungsmittel zugegeben.

Als organische Flockungsmittel können handelsübliche Marken eingesetzt werden. Hierbei handelt es sich um wasserlösliche, makromolekulare Verbindungen, die durch Polymerisation oder durch Copolymerisation von z. B. Acrylamid, von Acrylsäure und/oder ihren Salzen oder von Estern der Acrylsäure bzw. Methacrylsäure, die über ihre Alkoholkomponente, z. B. Aminoalkohole, speziell modifiziert worden sind. Diese Flockungsmittel unterscheiden sich außerdem noch durch ihre unterschiedliche elektrische Ladung (kationisch, anionisch oder elektroneutral) und durch ihren Polymerisationsgrad.

Die Auswahl eines geeigneten Flockungsmittels nach Art und Menge erfolgt nach bekannten Methoden im Labormaßstab. Solche Methoden sind in der DE-A-2 837 017 beschrieben. Bei dem erfindungsgemäßen Verfahren erwiesen sich die anionischen Flockungsmittel als besonders geeignet. Die erforderlichen Flockungsmittelmengen liegen im Bereich von 50 bis 350 g/m$^3$ Schlamm und sind abhängig von der Art des jeweiligen Schlamms und von der Feststoffkonzentration.

Die Flockungsmittel werden in Form ihrer 0,05- bis 0,2%igen wäßrigen Lösungen eingesetzt. Die Herstellung solcher verdünnter Flockungsmittellösungen aus den festen oder flüssigen Handelsprodukten erfolgt nach bekannten Methoden in handelsüblichen Vorrichtungen.

Die Flockungsmittellösungen werden direkt in die Schlammleitung nach der Schlammpumpe zudosiert. Hierbei können Eintragshilfen wie z. B. ein Kegelmischer oder ein statischer Rohrmischer mit geringem Querschnitt vorteilhaft sein.

Nach dieser Vorvermischung erfolgt eine Schlammvorbehandlung mit den wäßrigen 0,05- bis 0,2%igen Flockungsmittellösungen. Die Vorbehandlung kann in einem vertikal von unten nach oben durchströmten Rührbehälter (dynamischer Flockungsreaktor) innerhalb von 1 bis 3 Minuten bei Rührdrehzahlen von 5 bis 50 min$^{-1}$ erfolgen. Die Flockungsreifezeit und der günstigste Energieeintrag können nach der in der DE-A-2 920 434 beschriebenen Methode ermittelt werden.

Ebenso erfolgreich kann die Vorbehandlung in statischen Rohrmischern, die in ihrem Innern Wendeln besitzen, durchgeführt werden. Die Flockungsreifezeiten betragen in diesem Falle wegen der besonderen hydraulischen Verhältnisse weniger als 1 Minute. In der Regel werden mehrere Mischerelemente hintereinander geschaltet. Diese Mischstrecke (statischer Flockungsreaktor) ist dann Bestandteil der Schlammleitung.

Durch diese Vorbehandlung werden die Schlammgemische zur optimalen Entwässerbarkeit gebracht. Für die Durchführung des erfindungsgemäßen Verfahrens ist ausschlaggebend, daß ein Flockungsmittel ausgewählt wird, das nach der Flockungsreaktion im Flockungsreaktor (Rührbehälter oder statische Rohrmischer) eine besonders hohe Schwerkraftentwässerbarkeit des Schlammgemisches hervorruft, da die Hauptmenge des Schlammwassers durch reine Schwerkraftfiltration abgetrennt werden soll.

Nach der beschriebenen Schlammvorbehandlung werden die geflockten Schlammgemische, welche die Zuschlagstoffe enthalten, einer Entwässerungsvorrichtung zugeleitet und der Schwerkraftfiltration unterworfen.

Als Entwässerungsvorrichtungen für die Durchführung der Schwerkraftfiltration kommen Bandfilter oder Siebtrommeln in Betracht. Das Bandfilter kann auch das Unterband einer Siebbandpresse sein.

Die Siebtrommeln bestehen aus einem zylinderförmigen Käfig, auf dessen Umfangsfläche ein Filtergewebe aufgezogen wurde. Die Filtergewebe können aus Metalldraht oder aus Synthesefasern wie z. B. Polypropylen- oder Polyesterfasern bestehen. Die Siebtrommeln können in ihrem Innern außerdem noch oberflächenerneuernde Einbauten besitzen, so daß der Schlamm beim Durchlauf intensiv gewendet wird. Solche Einbauten sind Leitbleche, Wehre oder Hohlwendeln. Die Verweilzeit des zu entwässernden Klärschlamms in der Siebtrommel wird außer durch die Länge des Apparates und den Durchsatz noch durch den Füllgrad bestimmt. Die Siebtrommeln arbeiten bei Drehzahlen von 1 bis 20 min$^{-1}$. Die Verweilzeiten in dieser Entwässerungsstufe betragen 1 bis 10 Minuten und insbesondere 2 bis 5 Minuten.

Nach der Schwerkraftfiltration auf den genannten Apparaten werden Schlammfeststoffgehalte von 20 bis 30 Gew.-% erzielt und es werden bereits 40 bis 80% des Wassers abgetrennt.

Das vorentwässerte Schlammgemisch wird mit wäßrigen Lösungen von Salzen des Aluminiums, z. B. AlCl$_2$ oder des dreiwertigen Eisens, z. B. FeCl$_3$, FeClSO$_4$, Fe$_2$(SO$_4$)$_3$ behandelt. Die Metallsalzkonzentrationen der wäßrigen Lösungen können im Bereich von 1 bis 20 Gew.-% liegen. Die erforderlichen Mengen betragen 1 bis 3 kg Metallsalz (ber. 100%) je m$^3$ Ölschlamm.

Die Behandlung mit den wäßrigen Metallsalzlösungen geschieht in horizontalen Mischwerken oder besonders vorteilhaft durch Aufsprühen mit Verteilerdüsen auf das vorentwässerte Schlammgemisch.

Nach Zugabe der Metallsalzlösungen wird das Schlammgemisch einer Druckfiltration unterworfen.

Hierfür sind Filterpressen wie z. B. Kammerfilterpressen, Rahmenfilterpressen oder Membranfilter-

3

pressen geeignet. Besonders geeignet sind jedoch die kontinuierlich arbeitenden Druckzonen von Siebhandpressen.

Da die Schwerkraftfiltration in der ersten Verfahrensstufe einer Siebbandpresse, der Seilzone, durchgeführt werden kann und die zweite Verfahrensstufe einer Siebbandpresse, die Keil- und die Druckzonen, für die Druckfiltration geeignet ist, kommen für die Durchführung des erfindungsgemäßen Verfahrens insbesondere Siebbandpressen in Betracht. Es hat sich gezeigt, daß bei Anwendung der erfindungsgemäßen Maßnahmen ein einwandfreier Betrieb einer Siebbandpresse möglich ist.

Durch die Metallsalz-Zugabe wird das Mineralöl vom Schlammfeststoff spontan abgetrennt. Durch den raschen Abfluß des Mineralöls durch das Filterband erfolgt im Preßteil der Maschine weder ein Feststoffdurchschlag durch das Filterband, noch ein seitlicher Austritt der Schlammfeststoffe. Der Schlamm ist druckstabil.

In den Druckzonen können 80 bis 99% des vorhandenen Mineralöls ausgepreßt werden. Die Filtrate der Druckzonen werden gesondert in einem Scheidegefäß gesammelt. Hier trennt sich die Ölphase selbsttätig und scharf vom restlichen Schlammwasser.

Infolge des hohen Entölungsgrades der Schlammfeststoffe lösen sich die Filterkuchen selbsttätig von den Filterbändern ab. Die Filterbänder müssen keiner besonderen Reinigung unterzogen werden.

Bei der Durchführung des erfindungsgemäßen Verfahrens ist zu beachten, daß die Mineralöle fließfähig sind, d. h. es muß deutlich oberhalb der Stockpunkte (Bestimmung nach DIN 51597) der Mineralöle gearbeitet werden. Das Verfahren ist im allgemeinen bei Temperaturen oberhalb von +15°C durchführbar.

Die erhaltenen Filterkuchen besitzen einen Feststoffgehalt (Schlammfeststoff und feinteiliger Zuschlagstoff) von 55 bis 75%. Sie sind stichfest und ölarm. Die Restmengen an Öl betragen im allgemeinen 0,5 bis 15,0%.

Nach einer besonderen Ausführungsform des erfindungsgemäßen Verfahrens kann ein Teil der Filterkuchen nach mechanischer Auflockerung direkt oder nach einer Redispergierung in Wasser in Form einer wäßrigen Suspension als feinteilige Zuschlagstoffe wieder eingesetzt werden. Die erfindungsgemäßen Zuschlagstoffe wie Asche, feinteilige Kohle oder Sand werden dann nur noch in geringerer Menge oder aber bei Verschlechterung der Fahrweise zugesetzt.

Der wirtschaftliche Vorteil des erfindungsgemäßen Verfahrens besteht darin, daß 80 bis 99% des in den Ölschlämmen enthaltenen Mineralöls zurückgewonnen werden können und nicht mehr als Abfallprodukte verloren gehen. Die Umweltprobleme, die bei der häufigsten Art der Beseitigung, der Ablagerung in Schlammteichen, auftreten, werden durch das erfindungsgemäße Verfahren gelöst.

Durch die hohe Aufkonzentrierung der Schlammfeststoffe und die geringen Wassergehalte (Restfeuchten: 10 bis 30%) werden Preßkuchen erhalten, die transport- und lagerfähig sind.

Bei der Verfahrensvariante, bei der Aschen (Beispiel 9) oder Sand als Zuschlagstoffe verwendet werden, können die Preßkuchen jetzt mit relativ geringem Raumbedarf auf Hausmüll-Deponien oder Sonderdeponien verbracht werden. Infolge der niedrigen Heizwerte (siehe Beispiel 9: 1843 kJ/kg oder 441 kcal/kg) ist eine Verbrennung dieser Preßkuchen nicht wirtschaftlich.

Ist eine Entsorgung der Preßkuchen durch Verbrennung beabsichtigt, dann empfiehlt sich die Verfahrensvariante mit feinteiligen Kohlen als Zuschlagstoffe. Die Heizwerte $H_U$ der Preßkuchen liegen dann besonders hoch (siehe Beispiel 11: 14 768 kJ/kg oder 3533 kcal/kg). Sie liegen im Bereich einer guten Braunkohle ($H_U$: 2500 bis 3500 kcal/kg) und sind als Brennmaterial für Kraftwerke geeignet. Hier bietet sich der Vorteil, daß die feinteilige Kohle, die zunächst als Entwässerungshilfsmittel eingesetzt wurde, weiter als Primärenergieträger verwendet wird. Außerdem können die restlichen Ölmengen und der organische Anteil der Schlammfeststoffe auf diese Weise mit den bekannten Wirkungsgraden in Sekundärenergie (Strom und Dampf) umgewandelt werden. Die Preßkuchen stellen demnach nutzbare Primärenergieträger dar, die in Kraftwerken anstelle anderer Primärenergieträger verfeuert werden können.

Die Erfindung wird nachfolgend an Hand von Beispielen näher erläutert. Die dort angegebenen Prozentzahlen sind immer Gewichtsprozente.

Bei den Beispielen 1 bis 6 und den Vergleichsbeispielen 1 bis 4 wurde ein Ölschlamm aus der Aufbereitungsanlage eines Erdölförderbetriebes verwendet, der folgende Zusammensetzung hatte:

| Feststoff: | 3,9% |
|------------|------|
| Öl: | 32,5% |
| Wasser: | 63,6% |
| Dichte: | 0,98 g/cm³ |

Beispiele 1 bis 4

Jeweils 448 g Ölschlamm wurden mit 45 g der angegebenen feinteiligen Zuschlagstoffe (ber. 100% Feststoff) homogen vermischt. Diese Mischungen wurden in einem 1 l Standzylinder mit 75 ml (150 mg Wirkstoff/l Mischung) einer 0,1%igen wäßrigen Lösung eines Flockungsmittels mit 40%iger anionischer Modifizierung, ein Copolymerisat aus 60% Acrylsäure und 40% Natriumacrylat, versetzt. Durch

4

5-maliges Umstürzen des Standzylinders wurden die Mischungen geflockt. Die so vorbehandelten Schlammproben wurden auf einer Büchner-Nutsche aus Duranglas mit plangeschliffenem Schlitzsieb (120 mm ∅) gegeben, auf dem sich ein Filtergewebe aus Polypropylen-Leinen (110 mm ∅) befand.

Das ablaufende Filtrat (Wasser) wurde in einem Meßzylinder aufgefangen. Nach 30 Minuten Schwerkraftfiltration wurde die Filtratmenge gemessen.

Die vorentwässerten Schlammproben wurden in einer Porzellanschale mit 4,5 ml (1,07 g FeCl₃) einer 20%igen wäßrigen FeCl₃-Lösung (Dichte: 1,19 g/cm³) homogen vermischt. Danach wurden die Schlammproben in einer Laborstempelpresse (Fabrikat: Hubert, Sneek/Holland) :a2r2ruckfiltration unterworfen. Gepreßt wurde 1 Minute bei wachsendem und 2 Minuten bei konstantem Druck von 10 bar. Dabei wurde die Hauptmenge des Öls und weiteres Wasser abgetrennt. Das ausgepreßte Öl konnte in allen Fällen in einem Scheidegefäß scharf vom Wasser abgetrennt werden. Die Preßvorgänge konnten, ohne daß ein seitlicher Austritt des Schlamms erfolgte, durchgeführt werden. Die Preßkuchen waren trocken und lösten sich einwandfrei vom Filtergewebe ab.

Die Entwässerungsergebnisse sind in Tabelle 1 aufgeführt.

Tabelle 1

| Bei-spiele | Feinteilige Zuschlagstoffe | Feststoff-gehalt (%) nach Schwerkraft-filtration | Zusammensetzung der Preßkuchen | | | Abgetrennte Mengen aus dem eingesetzten Ölschlamm | |
|---|---|---|---|---|---|---|---|
| | | | FS (%) | Öl (%) | H₂O (%) | Öl (%) | H₂O (%) |
| 1 | Feinkohle (Flotations-konzentrat) (FS: 86,7%) | 22,1 | 63,9 | 18,3 | 18,1 | 88,7 | 94,3 |
| 2 | Kohleschlamm (FS: 41,5%) | 22,1 | 61,4 | 18,9 | 19,7 | 87,9 | 93,5 |
| 3 | Klärschlammasche pH: 7,6, Körnung: 85% unter 200 μm, 98% unter 300 μm | 21,9 | 59,8 | 15,8 | 24,4 | 88,4 | 90,9 |
| 4 | Sand (Körnung: 98,0% unter 315 μm) | 22,5 | 58,9 | 22,9 | 18,2 | 86,2 | 94,4 |

FS = Feststoffgehalt.

## Beispiele 5 und 6

Es wurde verfahren wie im Beispiel 1 bis 4 beschrieben. Als feinteiliger Zuschlagstoff wurde Klärschlammasche (pH: 7,6) verwendet. Nach der Schwerkraftfiltration wurde anstelle einer FeCl₃-Lösung bei Beispiel 5: 4,5 ml (1,07 g AlCl₃) einer 20%igen AlCl₃-Lösung und bei Beispiel 6: 4,5 ml (1,07 g FeClSO₄) einer 20%igen wäßrigen FeClSO₄-Lösung verwendet.

Folgende Ergebnisse wurden erhalten:

| | Beispiel 5 | Beispiel 6 |
|---|---|---|
| Fs (%) (nach Schwerkraftfiltration) | 21,8 | 21,9 |
| Zusammensetzung der Preßkuchen: | | |
| FS (%) | 61,2 | 59,1 |
| Öl (%) | 14,8 | 15,6 |
| H₂O (%) | 24,0 | 25,3 |

# 0 056 090

|  | Beispiel 5 | Beispiel 6 |
|---|---|---|
| Abgetrennte Mengen aus dem Ölschlamm: | | |
| Öl (%) | 90,9 | 90,3 |
| $H_2O$ (%) | 92,4 | 92,0 |

Die Preßkuchen konnten leicht vom Filtergewebe abgenommen werden. Die Ölphase trennte sich klar von der Wasserphase.

## Vergleichsbeispiel 1

448 g Ölschlamm wurden in einem 1 l Standzylinder mit 75 ml einer 0,1%igen wäßrigen Lösung eines Flockungsmittels mit einer 40%igen anionischen Modifizierung versetzt. Durch 5-maliges Umstürzen des Standzylinders wurde der Ölschlamm teilweise geflockt. Der geflockte Ölschlamm wurde, wie oben beschrieben, vorentwässert. Es konnte nur wenig Schlammwasser, das ölhaltig war, abgetrennt werden. Eine Druckfiltration auf der Stempelpresse war nicht möglich, da der Schlamm nicht druckstabil war und demzufolge seitlich aus der Stempelpresse austrat.

## Vergleichsbeispiel 2

In 44 g Ölschlamm wurden 4,5 ml einer 20%igen wäßrigen $FeCl_3$-Lösung homogen vermischt. Der so vorbehandelte Schlamm wurde in einem 1 l Standzylinder mit 75 ml einer 0,1%igen wäßrigen Lösung eines Flockungsmittels mit 40%iger anionischer Modifizierung wie im Vergleichsbeispiel 1 angegeben behandelt. Eine Flockung konnte nicht erreicht werden. Daher war auch keine Entwässerung möglich.

## Vergleichsbeispiel 3

448 g Ölschlamm wurden in einem 1 l Standzylinder mit 75 ml einer 0,1%igen wäßrigen Lösung eines Flockungsmittels mit 40%iger anionischer Modifizierung versetzt. Durch 5-maliges Umstürzen des Standzylinders wurde der Ölschlamm teilweise geflockt. Nach der Flockung wurde die Schlammprobe mit 4,5 ml einer 20%igen wäßrigen $FeCl_3$-Lösung homogen vermischt. Durch die Zugabe der $FeCl_3$-Lösung wurden die Flocken stark geschädigt. Eine Entwässerung durch Schwerkraftfiltration war nur bedingt möglich. Eine Abtrennung von Öl und Wasser durch Druckfiltration auf der Stempelpresse gelang nicht.

## Vergleichsbeispiel 4

Es wurde wie im Vergleichsbeispiel 1 beschrieben verfahren. Nach der partiellen Flockung und Vorentwässerung wurde die Schlammprobe in einer Porzellanschale mit 4,5 ml einer 20%igen wäßrigen $FeCl_3$-Lösung homogen vermischt. Danach erfolgte die Druckfiltration in der Stempelpresse. Eine Abtrennung von Öl und weiteren Wassers in der Presse war teilweise möglich. Der Ölschlamm war druckstabiler. Es traten nur geringe Mengen Schlamm seitlich aus der Stempelpresse aus. Die Preßkuchen lösten sich jedoch schwer vom Filtergewebe.

Die Vergleichsbeispiele 1 bis 4 in Verbindung mit Beispiel 3 zeigen, daß nur durch die erfindungsgemäßen Maßnahmen die Aufgabe der Erfindung gelöst werden kann.

## Beispiel 7

Es wurde ein Ölschlamm aus einer Aufbereitungsanlage eines Erdölförderbetriebes verwendet, der folgende Zusammensetzung hatte:

| | |
|---|---|
| Feststoff: | 8,6% |
| Öl: | 27,0% |
| Wasser: | 64,4% |
| Dichte: | 0,985 g/cm³ |

450 g Ölschlamm wurden mit 19 g einer Asche aus einer Müllverbrennungsanlage (pH: 7,2) vermischt. Die Schlamm-Mischung wurde in einem 1 l Standzylinder mit 75 ml (150 mg Wirkstoff/l Mischung) einer 0,1%igen wäßrigen Lösung eines Flockungsmittels mit 20%iger anionischer Modifizierung, ein Copolymerisat aus 80% Acrylsäure und 20% Natriumacrylat, versetzt. Durch 5-maliges Umstürzen des Standzylinders wurde geflockt. Danach wurde wie für die Beispiele 1 bis 4 beschrieben die Schwerkraftfiltration durchgeführt.

Das vorentwässerte Schlammgemisch wurde in einer Porzellanschale mit 4,5 ml (1,07 g FeCl₃) einer 20%igen wäßrigen $FeCl_3$-Lösung homogen vermischt. Danach wurde die Druckfiltration, wie bereits erläutert, ausgeführt.

Es wurden trockene Preßkuchen erhalten, die sich einwandfrei von den Filtertüchern ablösten. Das ausgepreßte Öl trennte sich scharf vom Wasser.

Nach Schwerkraftfiltration betrug der Feststoffgehalt: 22,4%. Der Preßkuchen hatte folgende Zusammensetzung:

FS: 56,9%, Öl: 16,1%, Wasser: 27,0%.

Hiernach wurden 89% des Öls und 92,3% des Schlammwassers abgetrennt.


Beispiele 8 bis 11

In einer Aufbereitungsanlage eines Erdölförderbetriebes wurde ein Ölschlamm aus der Flutanlage und ein Ölschlamm aus dem Tanklager im Volumenverhältnis 1 : 1 abgemischt.
Die Zusammensetzung dieser Ölschlamm-Mischung betrug:

FS: 6,8%, Öl: 30,8%, Wasser: 62,4%.

Jeweils 3 m³ dieser Ölschlamm-Mischung wurden in einem Rührbehälter unter Rühren mit einem langsam laufenden Kreuzrührer mit 330 kg der in Tabelle 2 angegebenen feinteiligen Zuschlagstoffe vermischt. Der Feststoffgehalt betrug danach 16%. Nach der Schlammpumpe wurde in die Schlammleitung eine 0,1%ige wäßrige Lösung eines organischen Flockungsmittels mit 40%iger anionischer Modifizierung, ein Copolymerisat aus 60% Acrylsäure und 40% Natriumacrylat, zugegeben. Es wurden 140 g Wirkstoff/m³ Schlamm benötigt. Die Vermischung des Schlammgemisches mit der Flockungsmittel-Lösung erfolgte in einer Serie von hintereinandergeschalteten statischen Mischern.

Danach wurde das vorbehandelte Schlammgemisch auf einer handelsüblichen Siebbandpresse (Bandbreite: 100 mm) entwässert. In der Seihzone konnte der größte Teil des vorhandenen Wassers abgetrennt werden.

Das Filtrat war klar und enthielt nur Spuren von Öl und von Schlammfeststoffen.

Nach der Seihzone wurde auf das vorentwässerte Schlammgemisch eine 4%ige wäßrige $FeCl_3$-Lösung mit Hilfe von Verteilerdüsen gesprüht. Die eingesetzten Mengen gehen aus der Tabelle 2 hervor. Danach erfolgte die Druckfiltration in der Keil- und in den Druckzonen der Maschine. Die Schlämme waren in allen Fällen druckstabil. Es erfolgte weder ein Durchschlag des Schlammes durch das Filtergewebe noch ein seitlicher Austritt des Schlammes. Das Filtrat der Druckzonen wurde in einem Scheidegefäß gesammelt. Die Ölphase trennte sich selbsttätig und scharf von der geringen Wasserphase.

Die Preßkuchen lösten sich einwandfrei von den Filtergeweben ab und waren stichfest. Auch eine Bandspülung konnte verzichtet werden. Die Maschine konnte mit einem Durchsatz von 3 m³ Ölschlamm/h betrieben werden.

Weitere Daten und Ergebnisse gehen aus der Tabelle 2 hervor:
Von den Preßkuchen der Beispiele 9 und 11, von dem Mineralöl (Ölphase) und der verwendeten Feinkohle wurden die Heizwerte $H_U$ ermittelt:

|  | kJ/kg | kcal/kg |
| --- | --- | --- |
| Mineralöl (Ölphase) | 45 144 | 10 800 |
| Flotationskonzentrat | 29 093 | 6 960 |
| Preßkuchen (Beispiel 9) | 1 843 | 441 |
| Preßkuchen (Beispiel 11) | 14 768 | 3 533 |

| Bei-spiele | Feinteilige Zuschlagstoffe | FeCl₃-Zugabe kg/m³ Ölschlamm | Zusammensetzung der Preßkuchen | | | Abgetrennte Öl-Menge |
|---|---|---|---|---|---|---|
| | | | FS % | Öl % | H₂O % | % |
| 8 | Asche aus einer Müllverbrennungsanlage, pH: 7,2 | 1,7 | 62,6 | 9,1 | 28,3 | 96,1 |
| 9 | Asche aus einer Müllverbrennungsanlage, pH: 7,2 | 2,6 | 68,4 | 5,5 | 26,1 | 97,6 |
| 10 | Feinkohle (Flotationskonzentrat) (FS: 86,7%) | 1,3 | 59,6 | 12,1 | 28,3 | 94,8 |
| 11 | Feinkohle (Flotationskonzentrat) (FS: 86,7%) | 2,1 | 64,2 | 8,6 | 27,2 | 96,3 |

## Beispiel 12

Es wurde wie für die Beispiele 8 bis 11 beschrieben verfahren. Jedoch wurden in der Ölschlamm-Mischung 110 kg/m³ Ölschlamm des Preßkuchens aus dem Beispiel 9 nach mechanischer Auflockerung homogen verteilt. Es wurden 2,6 kg FeCl₃/m³ Ölschlamm zugegeben.
Die Entwässerung und die Ölabtrennung auf der Siebbandpresse verliefen einwandfrei.

Zusammensetzung des Preßkuchens:
FS: 67,9%, Öl: 6,0%, H₂O: 26,1%.

Abgetrennte Menge Öl aus dem Ölschlamm: 97,4%.

## Vergleichsbeispiele 5 bis 7

Es wurde wie für die Beispiele 8 bis 11 beschrieben verfahren. Jedoch wurden in der Ölschlamm-Mischung jeweils 110 kg/m³ Ölschlamm nicht erfindungsgemäße Zuschlagstoffe homogen verteilt. Ebenso erfolgte kein Zusatz der erfindungsgemäßen wäßrigen Metallsalz-Lösungen nach der Schwerkraftfiltration.
Es wurden verwendet:

| | |
|---|---|
| Vergleichsbeispiel 5 | Sägemehl |
| Vergleichsbeispiel 6 | Kalkstein, gemahlen |
| Vergleichsbeispiel 7 | Dolomit, gemahlen |

## Ergebnisse

In allen Fällen wurden in der Seihzone der Siebbandpresse trübe Filtrate erhalten. In den Druckzonen wurden die Schlammgemische durch das Filtergewebe gedrückt. Seitlich trat Schlamm aus. Die Preßkuchen lösten sich nur schwer vom Filterband. Die Siebbänder und die gesamte Maschine wurde stark mit Ölschlamm verunreinigt. Das ausgetragene Preßgut war von breiiger Konsistenz und weder transport- noch deponiefähig.

## Beispiel 13

Es wurde ein Ölschlamm aus einem Sammelbecken einer Erdölraffinerie verwendet. Zur Homogenisierung wurde dieser durch Pumpen umgewälzt. Er hatte folgende Zusammensetzung:

| | |
|---|---|
| Feststoff: | 6,1% |
| Öl: | 71,2% |
| Wasser: | |
| Dichte: | 0,962 g/cm³ |
| pH: | 6,7 |

500 g Ölschlamm wurden mit 60 g Klärschlammasche (pH-Wert: 7,6) homogen vermischt. In einem 1 l Standzylinder wurde diese Mischung mit 150 ml (300 mg Wirkstoff/l Mischung) einer 0,1%igen wäßrigen Lösung eines Flockungsmittel mit 20%iger anionischer Modifizierung, ein Copolymerisat aus 80% Acrylsäure und 20% Natriumacrylat, versetzt. Durch 10-maliges Umstürzen des Standzylinders wurde geflockt. Die Schwerkraftfiltration, die Behandlung mit einer wäßrigen $FeCl_3$-Lösung und die Druckfiltration auf einer Laborpresse erfolgten wie für die Beispiele 1 bis 4 beschrieben.

Feststoffgehalte:
| | |
|---|---|
| nach Asche-Zusatz: | 16,0% |
| nach Schwerkraftfiltration: | 23,8% |

Der Preßkuchen löste sich ohne Kleben vom Filtertuch. Ausgepreßtes Öl und Wasser trennten sich scharf im Scheidegefäß.

Zusammensetzung des Preßkuchens:
| | |
|---|---|
| FS: | 72,6% |
| Öl: | 0,9% |
| $H_2O$: | 26,5% |

Abgetrennte Mengen aus dem Ölschlamm:
| | |
|---|---|
| Öl: | 98,7% |
| $H_2O$: | 88,5% |

## Vergleichsbeispiel 8

Es wurde wie im Beispiel 13 beschrieben verfahren. Jedoch wurde auf den Zusatz der wäßrigen $FeCl_3$-Lösung verzichtet.

Die Preßkuchen konnten nur schwer vom Filtertuch abgelöst werden. Öl- und Wasserphase des Filtrates waren mit Feststoffen verunreinigt.

Zusammensetzung des Preßkuchens:
| | |
|---|---|
| FS: | 70,9% |
| Öl: | 2,5% |
| $H_2O$: | 26,6% |

Abgetrennte Mengen aus dem Ölschlamm:
| | |
|---|---|
| Öl: | 96,6% |
| $H_2O$: | 88,4% |

## Beispiel 14

Es wurde wie im Beispiel 13 beschrieben verfahren. Jedoch wurden als feinteiliger Zuschlagstoff 80 g eines Grünkokses, der in einer Raffinerie anfällt, verwendet. Der Heizwert $H_U$ des Grünkokses betrug 35 100 kJ/kg (8400 kcal/kg).

Die Korngrößen lagen unterhalb 1 mm.

Zur Flockung wurden 150 ml (300 mg Wirkstoff/l Mischung) einer 0,1%igen wäßrigen Lösung eines elektroneutralen Flockungsmittels (Polyacrylamid) verwendet.

Feststoffgehalte:
| | |
|---|---|
| nach Grünkoks-Zusatz: | 19,0% |
| nach Schwerkraftfiltration: | 28,5% |

Die Preßkuchen lösten sich leicht vom Filtertuch. Es erfolgte eine scharfe Trennung von Öl und Wasser im Scheidegefäß. Beide Phasen sind frei von Feststoffen.

Zusammensetzung des Preßkuchens:
FS: 73,1%, Öl: 8,1%, $H_2O$: 14,8%

Abgetrennte Mengen aus dem Ölschlamm:
| | |
|---|---|
| Öl: | 89,3% |
| Wasser: | 93,8% |

Es wurden folgende Heizwerte $H_U$ ermittelt:

| | kJ/kg | kcal/kg |
|---|---|---|
| Ölphase | 48 870 | 11 691 |
| Preßkuchen | 22 062 | 5 278 |

**Patentansprüche**

1. Verfahren zum Entwässern mineralölhaltiger Schlämme durch zweistufige Entwässerung unter Verwendung feinteiliger Zuschlagstoffe und organischer Flockungsmittel, dadurch gekennzeichnet, daß man

a) in den mineralölhaltigen Schlämmen als feinteilige Zuschlagstoffe Asche, Kohle, Sand oder deren Gemische in rieselfähiger Form oder als wäßrige Suspension homogen verteilt, und zwar in einer Menge, bis der Gesamtfeststoffgehalt dieser Mischung 10 bis 30 Gew.-%, insbesondere 12 bis 20 Gew.-%, beträgt,

b) dieses Schlammgemisch mit wäßrigen Lösungen organischer Flockungsmittel, bevorzugt anionischer Flockungsmittel, behandelt,

c) durch Schwerkraftfiltration die Hauptmenge des Schlammwassers abtrennt,

d) das vorentwässerte Schlammgemisch mit wäßrigen Lösungen von Salzen des Aluminiums oder des dreiwertigen Eisens behandelt und

e) durch Druckfiltration weiterhin entwässert, wobei gleichzeitig die Hauptmenge des vorhandenen Mineralöls abgetrennt wird.

2. Verfahren nach Anspruch 1, dadurch gekennzeichnet, daß ein Teil der bei der Druckfiltration erhaltenen Filterkuchen mechanisch aufgelockert, in eine feinteilige Form gebracht und dann als Zuschlagstoff anstelle von Asche, Kohle oder Sand in den mineralölhaltigen Schlämmen homogen verteilt wird.

3. Verfahren nach Anspruch 1 oder 2, dadurch gekennzeichnet, daß Aschen mit einem pH-Wert von 6—8 verwendet werden.

**Claims**

1. A process for dewatering mineral-oil-containing sludges in two stages, using finely divided additives and organic flocculants, wherein

a) finely divided additives, such as ash, coal, sand or mixtures of these, in a free-flowing form or as an aqueous suspension, are homogeneously dispersed in the mineral-oil-containing sludge, in such an amount that the total solids content of the resulting mixture is from 10 to 30% by weight, especially from 12 to 20% by weight,

b) this sludge mixture is treated with an aqueous solution of an organic flocculant, preferably an anionic flocculant,

c) the greater part of the sludge water is removed by gravity filtration,

d) the pre-dewatered sludge mixture is treated with an aqueous solution of aluminium salts or trivalent iron salts, and

e) this mixture is further dewatered by pressure filtration, in the course of which the greater part of the mineral oil present is also removed.

2. A process as claimed in claim 1, wherein a part of the filter cake obtained from the pressure filtration is mechanically loosened, brought into a finely divided form and then dispersed homogeneously as an additive, in place of ash, coal or sand, in the mineral-oil-containing sludge.

3. A process as claimed in claim 1 or 2, wherein ash having a pH of from 6 to 8 is employed.

**Revendications**

1. Procédé de déshydration de boues contenant des huiles minérales en deux stades avec utilisation d'additifs en fines particules et d'agents de floculation organiques, caractérisé en ce que:

**0 056 090**

a) on incorpore aux boues contenant une ou des huiles minérales et on y répartit de façon homogène des cendres, du charbon ou du sable ou un mélange de ceux-ci sous forme de particules s'écoulant librement ou sous forme d'une suspension aqueuse en une proportion telle que la teneur totale du mélange en matières solides est comprise entre 10 et 30% en poids et en particulier entre 12 et 20% en poids;

b) on traite ce mélange de boues avec des solutions aqueuses d'agents de floculation organiques, de préférence de floculants anioniques;

c) on sépare par une filtration par gravité la majeure partie de l'eau boueuse;

d) on traite le mélange de boues partiellement déshydraté avec des solutions aqueuses de sels de l'aluminium ou du fer trivalent et

e) on complète la déshydration par une filtration à la presse, qui sépare simultanément la majeure partie de l'huile minérale présente.

2. Procédé suivant la revendication 1, caractérisé en ce qu'une fraction du gâteau obtenu dans la filtration à la presse est désagrégée par voie mécanique, réduite en fines particules et mélangée à homogénéité aux boues contenant de l'huile minérale en tant qu'additif remplaçant les cendres, le charbon ou le sable.

3. Procédé suivant la revendication 1 ou 2, caractérisé en ce que l'on emploie des cendres avec un pH de 6 à 8.

11